# EUROPEAN PATENT SPECIFICATION

(11) **EP 3 434 948 B1**
(45) Date of publication and mention of the grant of the patent: **21.10.2020**
(21) Application number: 18185357.3
(22) Date of filing: 24.07.2018
(51) Int. Cl.: F16K 31/365, A47J 31/46, F16K 7/17

(54) **CIRCUIT FOR SUPPLYING A LIQUID TO A MACHINE FOR PREPARING BEVERAGES**
QUERVERWEIS AUF VERWANDTE ANMELDUNGEN
RÉFÉRENCE CROISÉE VERS DES APPLICATIONS ASSOCIÉES

(30) Priority: 24.07.2017 IT 201700084294
(43) Date of publication of application: 30.01.2019
(73) Proprietor: Special Components S.r.l., 10040 Caselette (IT)
(72) Inventor: HERNANDEZ MERIDA, Viviana, 10040 CASELETTE (TO) (IT)
(74) Representative: D'Angelo, Fabio

(56) References cited:
- EP-A1- 3 168 513
- US-A1- 2006 207 432
- US-A1- 2008 276 807

## Description

The present invention relates to a circuit for supplying a liquid, in particular water, for a machine for preparing beverages, in particular hot beverages, such as coffee, to which the following description will make explicit reference without thereby losing its general character.

As already known, machines of the aforesaid type are widely available on the market, in which the powdered coffee, loose or in a pod, is inserted into a suitable housing arranged at a supplying area of the machine. The flow of pressurized hot water through this housing determines the instant preparation and delivery of the coffee.

Said machines are equipped with a hot water supplying circuit essentially comprising a water collection tank, a water heater connected to the supplying area and a pump connecting the tank to the heater.

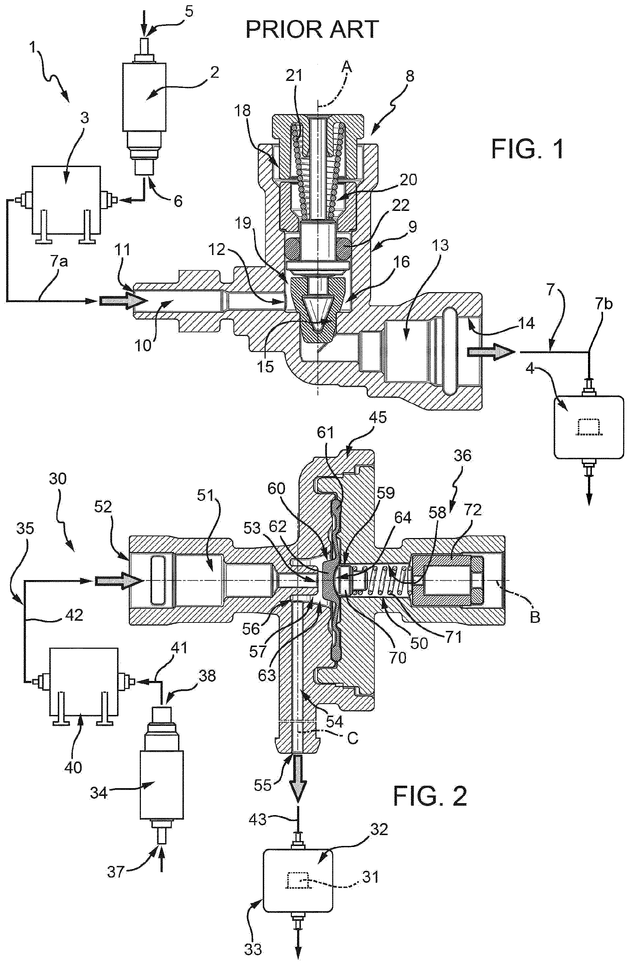

Figure 1 schematically shows an example of such a circuit indicated as a whole with 1. The pump, the heater and the coffee supplying area of the circuit 1 are indicated with 2, 3 and 4, respectively.

In particular, the pump 2 has an inlet section 5 connected to the tank (not shown) by means of a suction duct (also not shown), and an outlet section 6 connected to the heater 3 and to the supplying area 4 by means of a delivery line 7.

Substantially, if the user wants to prepare some coffee, she/he must activate both the heater 3 and the pump 2 so that the pressurized hot water passes through the coffee powder arranged in the supplying area 4.

Once deactivated the pump 2, the part of the circuit 1 interposed between the pump 2 and the hot water supplying area 4 can show a stagnation of pressurized water, with a consequent possible undesired dripping from the supplying area 4.

Moreover, the aforementioned pressurized water stagnation can generate undesired steam puffs upon opening the supplying area 4 for the removal of the used powdered coffee residue and for the preparation of fresh coffee.

In order to obviate the aforesaid drawbacks, a control valve 8 is arranged on the delivery line 7, close to the supplying area 4, for selectively opening/closing the connection between the heater 3 and the supplying area 4.

In particular, the control valve 8 comprises a hollow body 9 defining:
- a first fluid channel 10 having a first end 11 connected to the heater 3 through an upstream portion 7a of the delivery line 7, and a second opposite end 12;
- a second fluid channel 13 having a first end 14 connected to the supplying area 4 through a downstream portion 7b of the delivery line 7, and a second opposite end 15 connected to the end 12 of the channel 10 to define an intersection chamber 16 between the channels 1 and 10; and
- a seat 18 elongated along an axis A, opening into the intersection chamber 16 at one of its ends 19 and housing a selection member 20 movable along its axis A between an operating closing configuration (Figure 1), where is closes the fluid connection between the channels 10 and 13, and an operating opening configuration (not shown), where it leaves at least one passage between the channels 10 and 13, thus allowing their fluid connection.

In more detail, the selection member 20 is loaded by a spring 21 towards the operating closing configuration and is available in the operating opening configuration under the thrust of the pressurized water upon activation of the pump 2.

The selection member 20 cooperates with the inner delimiting surface of the seat 18 through a sealing ring 22, which slides on the aforesaid surface during the axial movements of the selection member 20. Such sliding is the main cause of the slow return of the actuating selection member 20 into the operating closing configuration following the deactivation of the pump 2, with a consequent residual dripping from the supplying area 4 for a non-negligible time interval after completion of the coffee preparation.

US 2008/276807A1 discloses a liquid supplying circuit as defined in the preamble of claim 1.

The object of the present invention is to provide a circuit for supplying a liquid, in particular water, for a machine for preparing beverages, in particular coffee, which allows remedying in a simple and inexpensive way the problems connected with the known and previously specified supplying circuits.

The aforesaid object is achieved by the present invention, in that it relates to a circuit for supplying a liquid, in particular water, for a machine for preparing beverages, in particular coffee, as defined in claim 1.

For a better understanding of the present invention, a preferred embodiment thereof is described below, purely by way of non-limiting example and with reference to the attached drawings, in which:
- Figure 1 is a schematic side view in partial section of a known type of circuit for supplying a liquid, in particular water, for a machine for preparing beverages, in particular coffee;
- Figure 2 is a schematic side view in partial section of a circuit for supplying a liquid, in particular water, for a machine for preparing beverages, in particular coffee, made according to the dictates of the present invention;
- Figures 3 and 4 are side views in axial section and in enlarged scale of a control valve of the circuit of Figure 2 in two different operating conditions; and
- Figure 5 is an exploded perspective view in reduced scale of the valve of Figures 3 and 4.

With reference to Figure 2, 30 indicates as a whole a circuit of a supplying circuit of a liquid, in particular water, for a machine for preparing beverages, in particular coffee (already known and not shown).

In the shown non-limiting example, the circuit 30 allows mixing the powdered coffee with pressurized hot water. In particular, the coffee, loose or in a pod 31, known and schematically shown with a dashed line, can be inserted into a suitable housing 32 arranged at a supplying area 33; the flow of pressurized hot water through the housing 32 determines the instantaneous preparation and delivery of the coffee from the supplying area 33.

The circuit 30 is supplied in a known way by a water collection tank (already known and not shown) and essentially comprises:
- a pump 34 for supplying pressurized water from the tank to a delivery line 35; and
- a valve 36 for controlling the water flow along the delivery line 35 between the pump 34 and the supplying area 33.

In particular, the pump 34 has an inlet section 37, connected to the tank by means of a suction duct (not shown), and an outlet section 38 connected to the delivery line 35.

The circuit 30 further comprises a heater 40 arranged along the delivery line 35 between the pump 34 and the supplying area 33 and connected at the inlet to the outlet section 38 of the pump 34 and at the outlet to the supplying area 33.

In the example shown in Figure 2, the delivery line 35 comprises:
- a first duct 41 connecting the outlet section 38 of the pump 34 to the heater 40;
- a second duct 42 connecting the heater 40 to the valve 36; and
- a third duct 43 connecting the valve 36 to the supplying area 33.

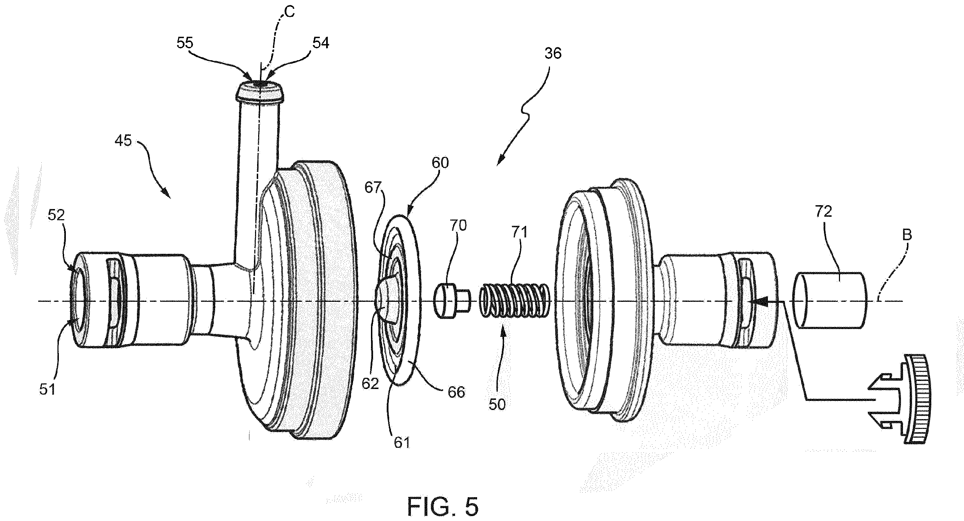

With reference to Figures 2 to 5, the valve 36 is of the exclusively mechanically actuated type (i.e. it is free of electrical control circuits) and comprises a hollow body 45, defining two paths respectively connected to the heater 40 and to the supplying area 33 and a selection member 50 for selectively controlling the connection between the aforementioned paths.

In more detail, the hollow body 45 of the valve 36 has:
- a first fluid channel 51 having an axis B, defining one of the aforementioned paths and having a first end 52 connected to the duct 42 and a second opposite end 53;
- a second fluid channel 54 having an axis C perpendicular to the axis B, defining the other of the aforementioned paths and having a first end 55 connected to the supplying area 33 and a second opposite end 56 connected to the end 53 of the channel 51 to define an intersection chamber 57 between the channels 51 and 54; and
- a seat 58 elongated along the axis B from the side opposite the channel 51, opening into the intersection chamber 57 at one of its ends 59 and engaged by the selection member 50 in an axially movable manner.

According to a possible alternative not shown, the seat 58 could be coaxial with the axis B or could extend along an axis different from the axes B and C.

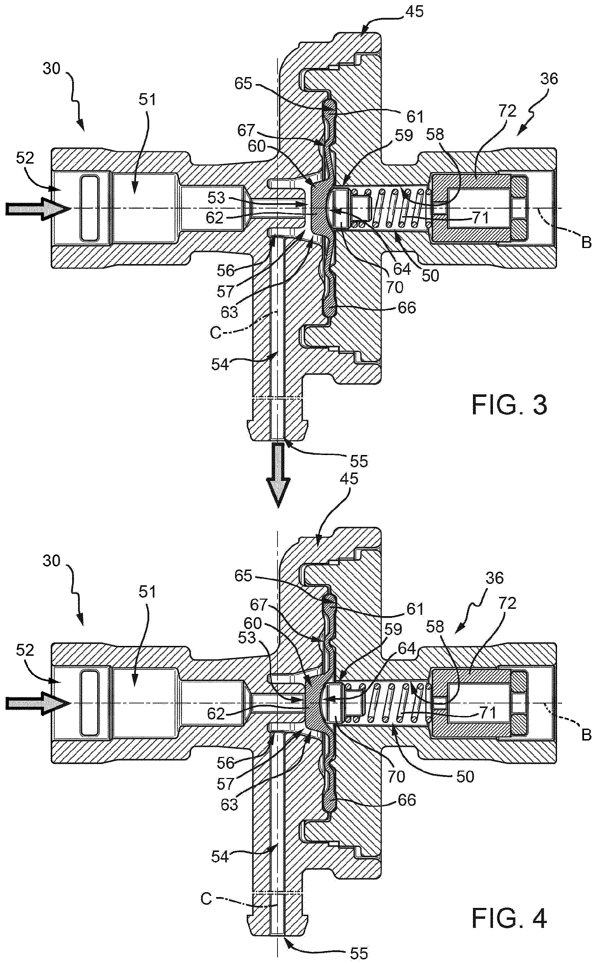

The selection member 50 is movable inside the seat 58 between an operating closing configuration (Figure 4), in which it closes the fluid connection between the channels 51 and 54, and an operating opening configuration (Figures 2 and 3), in which it allows the fluid connection between the channels 51 and 54.

Advantageously, the valve 36 further comprises a membrane shutter 60, preferably disk-shaped, housed in the intersection chamber 57 and having a peripheral portion 61 locked in a fixed position inside the intersection chamber 57, and a central portion 62 facing on the one side the selection member 50 and the seat 58 and on the opposite side the end 53 of the channel 51. The central portion 62 of the membrane shutter 60 is flexible inside the intersection chamber 57 away from and towards the end 53 of the channel 51 under the combined action of the thrust exerted by the selection member 50 in the direction of the axis B and of the thrust exerted by the pressurized water delivered by the pump 34, so as to enable/inhibit the fluid connection between the channels 51, 54.

In particular, the membrane shutter 60 is housed in the intersection chamber 57 so as to divide this latter into two separate environments 63, 64, one (63) of which is connected to both the channels 51, 54, whereas the other (64) is separated from the chamber 63 and is connected to the seat 58.

As shown in Figures 2 to 5, the membrane shutter 60 is arranged transversally with respect to the axis B and is adapted to cooperate in use, through the central portion 62, with the end 53 of the channel 51 and with the selection member 50.

In more detail, the membrane shutter 60 extends in a position facing the end 53 of the channel 51 and the seat 58 and is interposed between them along the axis B.

The peripheral portion 61 of the membrane shutter 60 is fluid tightly gripped in a relative annular gap 65 of the intersection chamber 57.

More precisely, the peripheral portion 61 of the membrane shutter 60 comprises an annular peripheral edge 66, which is thicker than the remaining part of the peripheral portion 61, and an undulation 67 arranged in a more internal radial position with respect to the peripheral edge 66. As shown in Figures 2 to 4, the peripheral edge 66 is sealingly housed in a complementary-shaped annular groove of the gap 65; analogously, the undulation 67 is sealingly housed in a complementary-shaped annular seat of the gap 65.

In the shown example, the central portion 62 of the membrane shutter 60 is dome-shaped and its convex side faces the environment 63 and the end 53 of the channel 51.

The selection member 50 comprises a piston 70 cooperating with the concave side of the central portion 62 of the membrane shutter 60, and a helical spring 71 acting on the piston 70 to push it against the central portion 62. A locking element 72, fixed to the hollow body 45 on the opposite side of the spring 71 with respect to the piston 70, defines a fixed abutment against which one end of the spring 71 operates; practically, the spring 71 is interposed between the locking element 72 and the piston 70 along the axis B.

The spring 71 loads the piston 70 towards the operating closing configuration and is pressed against the locking element 72 during the activation of the pump 34 due to the thrust exerted by the pressurized water against the central portion 62 of the membrane shutter 60.

In use, the ignition of the coffee-making machine determines the activation of the heater 40. After positioning a dose of powdered coffee or a pod 31 in the appropriate housing 32, coffee is prepared simply by activating the pump 34 by means of a special button (already known and not shown).

Following this activation, a pressure higher than the atmospheric pressure is set in the whole delivery line 35.

The clean water in the tank and inside the circuit 30 is therefore pumped towards the supplying area 33. In particular, the water flows through the duct 41 and enters the heater 40, where it is heated.

The hot water leaving the heater 40 flows through the duct 42 and reaches the channel 51 of the hollow body 45 of the valve 36; the water pressure is substantially higher than the force exerted by the spring 71 and by the piston 70 to maintain the central portion 62 of the membrane shutter 60 against the end 53 of the channel 51. Therefore, as a result of the thrust of the water, the central portion 60 of the membrane shutter 60 withdraws from the end 53 of the channel 51 and the selection member 50 moves into the operating opening configuration.

The pressurized hot water can therefore flow into the channel 54 until reaching the supplying area 33; here, by passing through the dose of powdered coffee or the pod 31, it instantly determines the preparation of the coffee.

At the end of the delivery of the desired amount of coffee, the pump 34 is deactivated; therefore, the pressure in the delivery line 35 begins to decrease, falling below the previous value.

When the force of the spring 71 exceeds the thrust exerted by the water pressure on the central portion 62 of the membrane shutter 60, the central portion 62, pressed by the selection member 50 returning to the operating closing configuration, is brought back into contact with the end 53 of the channel 51, thus interrupting the flow of water in the channel 54.

Thanks to the absence of any sliding between the sealing member (in this case the membrane shutter 60) and the inner delimiting surface of the seat 58 during the movement of the selection member 50, the movement of this latter is particularly rapid, with consequent minimization of the dripping time from the supplying area 33 after the preparation of each coffee.

Moreover, the particular arrangement of the membrane shutter 60 and of the selection member 50 on one side of the water flow from the heater 40 to the supplying area 33 prevents any pressure drop in the passage through the valve 36.

Finally, it is clear that modifications and variations can be made to the circuit 30 described and shown herein without thereby departing from the scope of protection defined by the appended claims.

## Claims

1. A circuit (30) for supplying a liquid, in particular water, for a machine for preparing beverages, in particular coffee, said circuit (30) comprising:
- a pump (34) for supplying said pressurized liquid into a delivery line (35);
- a supplying area (33) of said beverage connected to said delivery line (35);
- a control valve (36) for controlling the flow of said liquid between said delivery line (35) and said supplying area (33); and- a heater (40) arranged along said delivery line (35) upstream of said valve (36) and of said supplying area (33);
wherein said valve (36) comprises a hollow body (45), defining two paths connected respectively to said delivery line (35) and to said supplying area (33), and a selection member (50) for selectively controlling the connection between said paths;
wherein said hollow body (45) of said valve (36) has:
- a first fluid channel (51) defining one of said paths and having a first end (52) connected to said delivery line (35) and a second opposite end (53);
- a second fluid channel (54) defining the other of said paths and having a first end (55) connected to said supplying area (33) and a second opposite end (56) connected to said second end (53) of the first channel (51) for defining an intersection chamber (57) between said first and second channel (51, 54); and
- a seat (58) elongated along an axis (B), opening into said intersection chamber (57) at its own end (59) and movably engaged by said selection member (50) along said axis (B) between an operating closing configuration, wherein said selection member (50) closes the fluid connection between said first and second channel (51, 54), and an operating opening configuration, wherein said selection member (50) allows the fluid connection between said first and second channel (51, 54);
wherein said valve (36) further comprises a membrane shutter (60) housed in said intersection chamber (57) and having a first portion (61) locked in a fixed position inside said intersection chamber (57), and a second portion (62) facing, on one side, at least one (53) of said second ends (53, 56) of said first and second channel (51, 54), said second portion (62) of said membrane shutter (60) being flexible inside said intersection chamber (57) away from and towards said at least one (53) of said second ends (53, 56) of said first and second channel (51, 54) under the combined action of said selection member (50) and of the pressurized liquid delivered by said pump (34) so as to enable/inhibit the fluid connection between said first and second channel (51, 54);
wherein said membrane shutter (60) is housed inside said intersection chamber (57), thus dividing this latter into two different environments (63, 64), one (63) of which is connected to both of said first and second channel (51, 54) and the other (64) is permanently sealingly separated from said one (63) of said environments (63, 64) and is connected to said seat (58);
wherein said first channel (51) and said seat (58) are coaxial to one another and are arranged on opposite sides of said intersection chamber (57),
wherein said second channel (54) extends along a further axis (C) transversal to the axis (B) of said first channel (51) and of said seat (58),
wherein said membrane shutter (60) is arranged transversally to the axis (B) of said first channel (51) and of said seat (58) and cooperates, by means of said second portion (62), with the second end (53) of the first channel (51);
wherein said second portion (62) of said membrane shutter (60) faces said selection member (50) on the side opposite the one facing at least one (53) of said second ends (53, 56) of said first and second channel (51, 54); and wherein said selection member (50) is movable inside said seat (58);
**characterized in that** said membrane shutter (60) and said selection member (50) are arranged on one side of the liquid flow from said heater (40) to said supplying area (33) so as to prevent any pressure drop in the passage through said valve (36).

2. The circuit according to claim 1, wherein said valve (36) has an exclusively mechanical actuation.

3. The circuit according to any one of the previous claims, wherein said first portion (61) is a peripheral portion of said membrane shutter (60), and wherein said second portion (62) of said membrane shutter (60) is surrounded by said first portion (61).

4. The circuit according to any one of the previous claims, wherein said first portion (61) of said membrane shutter (60) comprises an annular peripheral edge (66) thicker than the remaining part of the first portion (61) and at least one undulation (67) arranged in a more internal radial position with respect to said peripheral edge (66); wherein said peripheral edge (66) is sealingly housed in a complementary-shaped annular groove of said intersection chamber (57); and wherein said undulation (67) is sealingly housed in a complementary-shaped annular length of said intersection chamber (57).

5. The circuit according to claim 4, wherein said second portion (62) is dome-shaped and its convex side faces the second end (53) of said first channel (51).

6. The circuit according to any one of the previous claims, wherein said first selection member (50) comprises a piston (70) cooperating with said second portion (62) of said membrane shutter (60), and elastic means (71) acting on said piston (70) to push it against the second portion (62) .

7. The circuit according to claim 6, wherein said valve (36) comprises abutment means (72) fixed to said hollow body (45) and housed in said seat (58) on the opposite side of said elastic means (71) with respect to said piston (70).

## Patentansprüche

1. Kreislauf (30) zum Zuführen einer Flüssigkeit, insbesondere Wasser für eine Maschine zum Zubereiten von Getränken, insbesondere Kaffee, wobei der Kreislauf (30) aufweist:
- eine Pumpe (34) zum Zuführen der unter Druck stehenden Flüssigkeit in eine Förderleitung (35);
- eine Zuführungsbereich (33) des Getränkes, der mit der Förderleitung (35) verbunden ist;
- ein Steuerventil (36) zum Steuern des Flusses der Flüssigkeit zwischen der Förderleitung (35) und dem Zuführungsbereich (33); und
- ein Heizelement (40), welches entlang der Förderleitung (35) stromabwärts des Ventils (36) und des Zuführungsbereiches (36) angeordnet ist;
- wobei das Ventil (36) einen Hohlkörper (45), der zwei Wege definiert, die jeweils mit der Förderleitung (35) und Zuführungsbereich (33) verbunden sind und ein Auswahlelement (50) aufweist zum selektiven Steuern der Verbindung zwischen den Wegen;
- wobei der Hohlkörper (45) des Ventils (36) hat:
- einen ersten Fluidkanal (51), der einen der Wege definiert und ein erstes Ende (52), welches mit der Förderleitung (35) verbunden ist und ein zweites gegenüberliegendes Ende (53) aufweist;
- einen zweiten Fluidkanal (54), welcher den anderen der Wege definiert und ein erstes Ende (55), welches mit dem Zuführungsbereich (33) verbunden ist und ein zweites gegenüberliegendes Ende (56) aufweist, welches mit dem zweiten Ende (53) des ersten Kanals (51) verbunden ist zum Definieren einer Schnittkammer (57) zwischen dem ersten und dem zweiten Kanal (51, 54); und
- einen Sitz (58), der sich entlang einer Achse (B) erstreckt, der sich in die Schnittkammer (57) an seinem eigenen Ende (59) öffnet und der durch das Auswahlelement (50) entlang der Achse (B) zwischen einer Betriebsschließkonfiguration, in der das Auswahlelement (50) die Fluidverbindung zwischen dem ersten und dem zweiten Kanal (51, 54) schließt und einer Betriebsöffnungskonfiguration, in der das Auswahlelement (50) die Fluidverbindung zwischen dem ersten und dem zweiten Kanal (51, 54) ermöglicht, beweglich in Eingriff steht;
wobei das Ventil (36) des Weiteren aufweist einen Membranverschluss (60), der in der Schnittkammer (57) aufgenommen ist und einen ersten Bereich (61), der in einer festen Position innerhalb der Schnittkammer (57) verriegelt ist und einen zweiten Bereich (62) aufweist, der auf einer Seite mindestens einen (53) der zwei Enden (53, 56) des ersten und zweiten Kanals (51, 54) zugewandt ist, wobei der zweite Bereich (62) des Membranverschlusses (60) innerhalb der Schnittkammer (57) flexibel weg und in Richtung des mindestens einen (53) der zwei Enden (56, 56) des ersten und zweiten Kanals (51, 54) unter der kombinierten Wirkung des Auswahlelementes (50) und des unter Druck stehenden Flüssigkeit, die von der Pumpe (34) geliefert wird, ist, um so die Fluidverbindung zwischen dem ersten und dem zweiten Kanal (51, 54) zu ermöglichen/zu verhindern;
wobei der Membranverschluss (60) in der Schnittkammer (57) aufgenommen ist, wodurch diese in zwei unterschiedliche Umgebungen (63, 64) unterteil wird, wovon eine (63) mit beiden des ersten und zweiten Kanals (51, 54) verbunden ist und die andere (64) von der einen (63) der Umgebungen (63, 64) permanent abgedichtet getrennt und mit dem Sitz (58) verbunden ist;
wobei der erste Kanal (51) und der Sitz (58) koaxial zueinander sind und auf gegenüberliegenden Seiten der Schnittkammer (57) angeordnet sind,
wobei der zweite Kanal (54) sich entlang einer weiteren Achse (C) quer zur Achse (B) des ersten Kanals (51) und des Sitzes (58) erstreckt;
wobei der Membranverschluss (60) quer zu der Achse (B) des ersten Kanals (51) und des Sitzes (58) angeordnet ist und mittels des zweiten Bereiches (62) mit dem zweiten Ende (53) des ersten Kanals (51) zusammen wirkt;
wobei der zweite Bereich (62) des Membranverschlusses (60) dem Auswahlelement (50) auf der Seite gegenüberliegt, die gegenüber der Seite, die gegenüber mindestens einem (53) der zweiten Enden (53, 56) des ersten und zweiten Kanals (51, 54) liegt und
wobei das Auswahlelement (50) beweglich in dem Sitz (58) ist;
**dadurch gekennzeichnet,**
**dass** der Membranverschluss (60) und das Auswahlelement (50) auf einer Seite des Flüssigkeitsflusses von dem Heizelement (40) zu dem Zuführungsbereich (33) angeordnet ist, um jeglichen Druckverlust bei der Passage durch das Ventil (36) zu verhindern.

2. Kreislauf nach Anspruch 1,
wobei das Ventil (36) eine ausschließliche mechanische Betätigung aufweist.

3. Kreislauf nach einem der vorangehenden Ansprüche,
wobei der erste Bereich (61) ein peripherer Bereich des Membranverschlusses (60) ist und wobei der zweite Bereich (62) des Membranverschlusses (60) von dem ersten Bereich (61) umgeben ist.

4. Kreislauf nach einem der vorangehenden Ansprüche,
wobei der erste Bereich (61) des Membranverschlusses (60) eine ringförmige periphere Kante (66) aufweist, die dicker als der restliche Teil des ersten Bereiches (61) ist und mindestens eine Wellung (67), welche in einer weiter innenliegenden radialen Position in Bezug auf die periphere Kante (66) angeordnet ist; wobei die periphere Kante (66) in einer komplementär geformten ringförmigen Nut der Schnittkammer (57) abdichtend untergebracht ist; und wobei die Wellung (67) in einer komplementär geformten ringförmigen Länge der Schnittkammer (57) aufgenommen ist.

5. Kreislauf nach Anspruch 4,
wobei der zweite Bereich (62) kuppelförmig ist und seine konvexe Seite dem zweiten Ende (53) des ersten Kanals (51) zugewandt ist.

6. Kreislauf nach einem der vorangehenden Ansprüche,
wobei das erste Auswahlelement (50) einen Kolben (70), welcher mit dem zweiten Bereich (62) des Membranverschlusses (60) zusammenwirkt und elastische Mittel (71) aufweist, welche auf den Kolben (70) wirken, um ihn gegen den zweiten Bereich (62) zu drücken.

7. Kreislauf nach Anspruch 6,
wobei das Ventil (36) Anschlagmittel (72) aufweist, die an dem Hohlkörper (45) angebracht sind und in dem Sitz (58) auf der gegenüberliegenden Seite der elastischen Mittel (71) in Bezug auf den Kolben (70) aufgenommen sind.

## Revendications

1. Circuit (30) pour fournir un liquide, en particulier de l'eau, pour une machine à préparer des boissons, en particulier du café, ledit circuit (30) comprenant :
- une pompe (34) pour alimenter ledit liquide sous pression dans une ligne de distribution (35) ;
- une zone d'alimentation (33) de ladite boisson connectée à ladite ligne de distribution (35) ;
- une valve de commande (36) pour commander l'écoulement dudit liquide entre ladite ligne de distribution (35) et ladite zone d'alimentation (33) ; et
- un élément de chauffe (40) agencé le long de ladite ligne de distribution (35) en amont de ladite valve (36) et de ladite zone d'alimentation (33) ;
dans lequel ladite valve (36) comprend un corps creux (45), définissant deux chemins connectés respectivement à ladite ligne de distribution (35) et à ladite zone d'alimentation (33), et un élément de sélection (50) pour commander sélectivement la connexion entre lesdits chemins ;
dans lequel ledit corps creux (45) de ladite valve (36) a :
- un premier canal de fluide (51) définissant l'un desdits chemins et ayant une première extrémité (52) connectée à ladite ligne de distribution (35) et une deuxième extrémité opposée(53) ;
- un deuxième canal de fluide (54) définissant l'autre desdits chemins et ayant une première extrémité (55) connectée à ladite zone d'alimentation (33) et une deuxième extrémité opposée (56) connectée à ladite deuxième extrémité (53) du premier canal (51) pour définir une chambre d'intersection (57) entre lesdits premier et deuxième canaux (51, 54) ; et
- un siège (58) élongé le long d'un axe (B), s'ouvrant dans ladite chambre d'intersection (57) à sa propre extrémité (59) et engagé de manière mobile par ledit élément de sélection (50) le long dudit axe (B) entre une configuration de fermeture opérationnelle, dans laquelle ledit élément de sélection (50) ferme la connexion de fluide entre lesdits premier et deuxième canaux (51, 54), et une configuration d'ouverture opérationnelle, dans laquelle ledit élément de sélection (50) permet la connexion de fluide entre lesdits premier et deuxième canaux (51, 54) ;
dans lequel ladite valve (36) comprend en outre un obturateur à membrane (60) logé dans ladite chambre d'intersection (57) et ayant une première partie (61) verrouillée dans une position fixe à l'intérieur de ladite chambre d'intersection (57), et une deuxième partie (62) faisant face, sur un côté, à au moins une (53) desdites deuxièmes extrémités (53, 56) desdits premier et deuxième canaux (51, 54), ladite deuxième partie (62) dudit obturateur à membrane (60) étant flexible à l'intérieur de ladite chambre d'intersection (57) en s'éloignant et en se rapprochant de ladite au moins une (53) desdites deuxièmes extrémités (53, 56) desdits premier et deuxième canaux (51, 54) sous l'action combinée dudit élément de sélection (50) et du liquide sous pression délivré par ladite pompe (34) de manière à permettre/inhiber la connexion de fluide entre lesdits premier et deuxième canaux (51, 54) ;
dans lequel ledit obturateur à membrane (60) est logé à l'intérieur de ladite chambre d'intersection (57), divisant ainsi cette dernière en deux environnements différents (63, 64), dont l'un (63) est connecté aux deux dudit premier canal et dudit deuxième canal (51, 54) et l'autre (64) est séparé de façon permanente et étanche dudit un (63) desdits environnements (63, 64) et est connecté audit siège (58) ;
dans lequel ledit premier canal (51) et ledit siège (58) sont coaxiaux l'un par rapport à l'autre et sont agencés sur des côtés opposés de ladite chambre d'intersection (57),
dans lequel ledit deuxième canal (54) s'étend le long d'un autre axe (C) transversal à l'axe (B) dudit premier canal (51) et dudit siège (58),
dans lequel ledit obturateur à membrane (60) est agencé transversalement à l'axe (B) dudit premier canal (51) et dudit siège (58) et coopère, au moyen de ladite deuxième partie (62), avec la deuxième extrémité (53) du premier canal (51) ;
dans lequel ladite deuxième partie (62) dudit obturateur à membrane (60) fait face audit élément de sélection (50) sur le côté opposé à celui qui fait face à au moins une (53) desdites deuxièmes extrémités (53, 56) desdits premier et deuxième canaux (51, 54) ;
et dans lequel ledit élément de sélection (50) est mobile à l'intérieur dudit siège (58) ;
**caractérisé en ce que** ledit obturateur à membrane (60) et ledit élément de sélection (50) sont agencés sur un côté de l'écoulement de liquide depuis l'élément de chauffe (40) vers ladite zone d'alimentation (33) de manière à empêcher toute chute de pression dans le passage à travers ladite valve (36).

2. Circuit selon la revendication 1, dans lequel ladite valve (36) a un actionnement exclusivement mécanique.

3. Circuit selon l'une quelconque des revendications précédentes, dans lequel ladite première partie (61) est une partie périphérique dudit obturateur à membrane (60), et dans lequel ladite deuxième partie (62) dudit obturateur à membrane (60) est entourée par ladite première partie (61).

4. Circuit selon l'une quelconque des revendications précédentes, dans lequel ladite première partie (61) dudit obturateur à membrane (60) comprend un bord périphérique annulaire (66) plus épais que la partie restante de la première partie (61) et au moins une ondulation (67) agencée dans une position radiale plus interne par rapport audit bord périphérique (66) ; dans lequel ledit bord périphérique (66) est logé de manière étanche dans une rainure annulaire de forme complémentaire de ladite chambre d'intersection (57) ; et dans lequel ladite ondulation (67) est logée de manière étanche dans une longueur annulaire de forme complémentaire de ladite chambre d'intersection (57).

5. Circuit selon la revendication 4, dans lequel ladite deuxième partie (62) est en forme de dôme et son côté convexe fait face à la deuxième extrémité (53) dudit premier canal (51).

6. Circuit selon l'une quelconque des revendications précédentes, dans lequel ledit premier élément de sélection (50) comprend un piston (70) coopérant avec ladite deuxième partie (62) dudit obturateur à membrane (60), et des moyens élastiques (71) agissant sur ledit piston (70) pour le pousser contre la deuxième partie (62).

7. Circuit selon la revendication 6, dans lequel ladite valve (36) comprend des moyens de butée (72) fixés audit corps creux (45) et logés dans ledit siège (58) sur le côté opposé desdits moyens élastiques (71) par rapport audit piston (70).
